# EUROPÄISCHE PATENTSCHRIFT

(11) **EP 1 832 777 B1**
(45) Veröffentlichungstag und Bekanntmachung des Hinweises auf die Patenterteilung: **02.07.2008**
(21) Anmeldenummer: 07103248.6
(22) Anmeldetag: 28.02.2007
(51) Int. Cl.: F16D 55/226, F16D 65/095

(54) **Scheibenbremse**
Disc brake
Frein à disque

(30) Priorität: 08.03.2006 DE 102006010754
(43) Veröffentlichungstag der Anmeldung: 12.09.2007
(73) Patentinhaber: Haldex Brake Products AB, 261 24 Landskrona (SE)
(72) Erfinder: Stensson, Göran, 277 55 Brösarp (SE); Sandberg, Stefan, 234 35 Lomma (SE)
(74) Vertreter: Habermann, Gert

(56) Entgegenhaltungen:
- DE-A1- 10 006 392
- DE-A1- 19 831 838
- GB-A- 2 123 909
- US-A1- 2003 111 305

## Beschreibung

Die vorliegende Erfindung betrifft eine Scheibenbremse, insbesondere für Nutzfahrzeuge, sowie einen Bremsbelaghalter zur Verwendung in einer solchen Scheibenbremse. So eine Scheibenbremse geht z.B. aus GB-A-2 213 909 hervor.

Es ist ein allgemeines Bestreben bei Scheibenbremsen der unterschiedlichsten Bauweisen, einerseits die Baumaße und das Gewicht so gering wie möglich zu halten sowie andererseits die Montage und den Einbau in ein Nutzfahrzeug so einfach wie möglich zu gestalten, ohne dabei Einbußen hinsichtlich der Funktionsweise und Lebensdauer der Scheibenbremse in Kauf zu nehmen.

Bei den Scheibenbremsen aus dem Stand der Technik ist in der Regel im Inneren eines Bremssattelgehäuses ein Bremsbetätigungsmechanismus vorgesehen, welcher einen Verstärkungsmechanismus, beispielsweise einen exzentrisch gelagerten Hebel, und ein mit dem Verstärkungsmechanismus verbundenes Druckstück, beispielsweise eine Traverse, aufweist, wobei der Hebel, welcher von einem Druckzylinder betätigt wird, die von dem Zylinder stammende Bremskraft durch die exzentrische Lagerung verstärkend auf die Traverse überträgt, welche in Richtung zu der von dem Bremssattel übergriffenen Bremsscheibe verschoben wird.

Das Druckstück bzw. die Traverse sind an dem bremsscheibenseitigen Ende mit einer Druckplatte versehen, welche mit einem Bremsbelaghalter in Kontakt gelangt, diesen gegen die Bremsscheibe drückt, bis der Bremsbelag die Bremsscheibe berührt, und so die Bremskraft in die Bremsscheibe einleitet.

Hierfür muss das Druckstück in dem Gehäuse des Bremssattels axial verschieblich geführt sein. Während das Druckstück im Bereich des Verstärkungsmechanismus im Bremssattelgehäuse geführt ist, kann die Druckplatte einerseits innenseitig an den die Bremsscheibe übergreifenden Armen bzw. Flügeln des Bremssattels oder für den Fall einer Gleitsattelbremse an einem Träger des Bremssattels geführt werden.

Andererseits kann auch das Druckstück im Bremssattelgehäuse im Bereich der Öffnung, welche der Bremsscheibe gegenüberliegt, geführt sein.

In allen Fällen müssen die jeweiligen Führungsgleitflächen im Gehäuse des Bremssattels soweit wie konstruktionsbedingt möglich auseinander liegen, um eine einwandfreie axiale Führung des Druckstücks zu ermöglichen, welche im Wesentlichen ein Verkippen des Druckstücks bei Bremskraftbetätigung verhindern soll. Dies bedingt entsprechende, hinsichtlich der Oberflächenbeschaffenheit zu bearbeitende Gleitflächen an der Außenfläche des Druckstück einerseits und an der Innenfläche des Bremssattelgehäuses anderseits. Insbesondere im Inneren des Bremssattelgehäuses ist eine solche Nachbearbeitung des in der Regel aus Gusseisen bestehenden Bremssattelkörpers aufwendig.

Darüber hinaus führen viele Gleitflächen trotz entsprechender Oberflächenbeschaffenheit zu vermehrten Reibungskräften, was die Anforderungen an die Genauigkeit der zwingend erforderlichen Nachstellspindein in solchen Scheibenbremsen, welche beispielsweise in der Traverse drehbar geführt sind, erhöht. Sowohl die Nachbearbeitung von Gleitoberflächen als auch die entsprechende Ausgestaltung und Konstruktion der Nachstellmechanismen zur Erzielung einer einwandfreien Nachstellfunktion unter allen Bedingungen führen zu erhöhten Herstellungskosten.

Die Druckplatte an dem bremsscheibenseitigen Ende des Druckstücks überträgt den Druck durch die Bremskraft auf den Bremsbelaghalter und muss diesen Druck entsprechend über die Fläche des Bremsbelags verteilen. Der Bremsbelaghalter mit dem Bremsbelag ist radial und tangential an dem Gehäuse des Bremssattels bei einer Festsattelbremse oder an einem Bremssattelträger bei einer Gleitsattelbremse geführt.

Zur Verteilung der Bremskraft weist die Druckplatte regelmäßig erhebliche Abmessungen auf, ist schwer und daher kostenintensiv herzustellen. Darüber hinaus führen die Abmessungen der Druckplatte dazu, dass die Variabilität und Freiheit der Gestaltung des Bremssattels gerade an solchen Stellen eingeschränkt ist, an welchen erhöhte mechanische Spannungen im Sattelkörper auftreten, insbesondere im Übergangsbereich zwischen dem Bremssattelgehäuse, in welcher der Betätigungsmechanismus aufgenommen ist, und den sich von dem Gehäuse erstreckenden Armen bzw. Flügeln des Bremssattels, welche die Bremsscheibe übergreifen.

Ausgehend davon ist es eine Aufgabe der vorliegenden Erfindung, eine neuartige Scheibenbremse bereitzustellen, welche die vorhergehend genannten Probleme und Nachteile ausräumt.

Gelöst wird diese Aufgabe mit einer Scheibenbremse mit den Merkmalen nach Anspruch 1 und mit einem Bremsbelaghalter für eine solche Scheibenbremse mit den Merkmalen nach Anspruch 13.

Die Erfindung beruht darauf, dass die Druckplatte, welche an dem bremsscheibenseitigen Ende des Druckstücks vorgesehen ist, mit dem Bremsbelaghalter derart kraftübertragend verbunden ist, dass sowohl bei einer Bremsbetätigung, wenn der Bremsbelag gegen die Bremsscheiben angelegt wird, als auch bei einer Bremskraftlösung, wenn der Bremsbelag mangels weiterer Druckkraft von dem Verstärkungsmechanismus mittels einer Rückstellvorrichtung, beispielsweise einer Rückstellfeder, zurück bewegt wird, das Druckstück über den Bremsbelaghalter in dem Bremssattel axial verschieblich geführt ist.

Diese axiale Führung wiederum wird dadurch bewerkstelligt, dass der Bremsbelaghalter mit dem Bremsbelag entweder in einem Bremssattelgehäuse oder in einem Bremssattelträger radial und tangential und damit auch axial geführt ist.

Durch die erfindungsgemäße Ausgestaltung entfällt die Notwendigkeit, am bremsscheibenseitigen Ende des Gehäuses des Bremssattels, an den Innenflächen der Arme des Bremssattels oder an den Innenflächen des Trägers bei einer Gleitsattelbremse entsprechend bearbeitete Gleitflächen für das Druckstück vorzusehen, was die Kosten minimiert.

Durch die kraftübertragende und führende Verbindung zwischen dem Bremsbelaghalter und der Druckplatte kann letztere weitaus kleiner ausgestaltet werden. Diese muss lediglich eine solche Größe aufweisen, dass noch eine ausreichende Verteilung der Zuspannkraft über den Bremsbelag sichergestellt ist.

Auf Grund der Tatsache, dass die Führungsflächen des Bremsbelaghalters gemäß der Erfindung auch als Gleitflächen für die axiale Führung des Druckstücks im Bremssattelgehäuse dienen, vermindert sich durch den Wegfall der axialen Gleitflächen im Bereich der bremsscheibenseitigen Öffnung im Gehäuse der Reibungswiderstand insgesamt um nahezu ein Drittel. Hierdurch kann wiederum eine einwandfreie Funktion des Nachstellmechanismus selbst bei einfacherer, toleranzärmerer Bauweise sichergestellt werden.

Eine wesentlich kleinere Ausgestaltung der Druckplatte ermöglicht darüber hinaus eine insgesamt kompaktere Bauweise des Bremssattels einhergehend mit einer Gewichtsreduzierung. Kritische Bereiche im Bremssattel selbst, in welchen erhebliche mechanische Belastungen während des Bremsvorgangs auftreten, beispielsweise an den Übergangsstellen zwischen dem Bremssattelgehäuse und den die Bremsscheibe übergreifenden Armen, können stabiler ausgestaltet werden, da infolge der kleineren Druckplatte mehr Bauraum und damit Gestaltungsspielraum zur Verfügung steht.

Die Oberflächenbearbeitung für die zweiten axialen Gleitflächen im Bremssattelgehäuse entfällt, was die Herstellungskosten minimiert.

Die erfindungsgemäße Ausgestaltung der Verbindung zwischen der Druckplatte und dem Bremsbelaghalter lässt sich sowohl bei Fest- als auch bei Gleitsattelbremsen verwenden. Auch ist die Erfindung nicht auf bestimmte Arten von Druckstücken begrenzt, vielmehr lassen sich die Druckplatten bei Traversen mit zwei parallelen Nachstellspindeln ebenso wie bei zylindrischen Druckstößeln zum Einsatz bringen.

Gemäß der Erfindung wird die eine axiale Führung des Druckstücks ermöglichende Verbindung zwischen der Druckplatte und dem Bremsbelaghalter dadurch bewerkstelligt, dass die Druckplatte der Bremsscheibe zugewandt zumindest ein Verbindungselement aufweist, welches mit einem formkomplementären Verbindungselement zusammenwirkt, welches auf seiner der Bremsscheibe abgewandten Seite an dem Bremsbelaghalter angeordnet ist.

In einer Ausführungsform kann es sich dabei bei der Druckplatte um einen vorzugsweise zylindrischen Vorsprung oder Zapfen handeln, welcher in Richtung zu der Bremsscheibe zeigt und in eine entsprechende formkomplementäre Ausnehmung in dem Bremsbelaghalter eingreift.

In einer anderen Ausführungsform ist ein solcher Zapfen oder Vorsprung an dem Bremsbelaghalter, in Richtung zu dem Bremssattelgehäuse zeigend, vorgesehen und greift in eine entsprechende Ausnehmung in der Druckplatte ein.

In beiden Fällen ist es von Vorteil, wenn jeweils zumindest zwei zueinander beabstandete Vorsprünge und Ausnehmungen vorgesehen sind, um eine radiale und tangentiale Stabilität auszubilden.

In einer bevorzugten Ausführungsform weist der Bremsbelaghalter eine Ausnehmung auf, deren Abmessungen der Umfangsform der Druckplatte formkomplementär entsprechen, so dass diese vollständig in dieser Ausnehmung aufgenommen ist.

In einer weiteren bevorzugten Ausführungsform weist die zur Druckplatte gewandte Oberfläche des Bremsbelaghalters zwei einander gegenüberliegende Vorsprünge auf, welche die Druckplatte, deren Seiten einfassend, aufnehmen. Die Gestaltung der Vorsprünge richtet sich nach der Form und den Seitenflächen der Druckplatte; sie sind vorzugsweise als im Wesentlichen U-förmige Ränder ausgebildet, wodurch eine radiale und tangentiale Fixierung der Druckplatte sichergestellt ist.

Allen Ausführungen ist gemeinsam, dass die Verbindung zwischen der Druckplatte und dem Bremsbelaghalter mechanisch so ausgebildet ist, dass eine radiale und tangentiale Relativbewegung zwischen diesen Elementen vermieden wird. Dennoch können gemäß der Erfindung die unterschiedlichen Verbindungselemente so konfiguriert sein, dass sich zwischen diesen zumindest eine solche Spielpassung ausbildet, die ein einfaches Auswechseln der Bremsbeläge bzw. Bremsbelaghalter ermöglicht.

Gerade das erfindungsgemäße Prinzip, die Druckplatte mit dem Bremsbelaghalter zu verbinden, vereinfacht nicht nur ein Auswechseln der Bremsbeläge, sondern gestattet auch eine einfachere Montage des Betätigungsmechanismus mit dem Druckstück im Bremssattelgehäuse selbst.

Auf Grund der Tatsache, dass im vorderen Öffnungsbereich des Bremssattelgehäuses keine axialen Führungsflächen für das Druckstück vorgesehen werden müssen, da diese Aufgabe von den Führungs- und Lagerflächen des Bremsbelaghalters im Bremssattel oder im Bremssattelträger übernommen wird, können das Bremssattelgehäuse und auch das Druckstück wesentlich kürzer ausgebildet werden, was die Außenabmessungen der Scheibenbremse und damit den notwendigen Bauraum weiter reduziert. Die dadurch bessere Zugänglichkeit vereinfacht darüber hinaus die Montage einer solchen Scheibenbremse in einem Fahrzeug.

In einer weiteren bevorzugten Ausführungsform ist des Weiteren eine Federklammer vorgesehen, welche montiert wird, um den Bremsbelaghalter und die Druckplatte zu übergreifen, um diese in einer festen Verbindung zu halten, insbesondere während der Bremskraftlösung und im Ruhezustand. Das Druckstück wird in der Regel über eine Druckfeder, welche zwischen dem Bremssattelgehäuse und dem Druckstück wirkt, zurückbewegt, wenn keine Bremskraft mehr über den Verstärkungsmechanismus eingeleitet wird.

Die Federklammer zieht dabei auch den Bremsbelaghalter und damit den Bremsbelag auf effektive Art und Weise von der Bremsscheibe zurück. Damit wird die Gefahr eines Nachschleppens des Bremsbelags durch die sich drehende Bremsscheibe bei einer Bremskraftlösung vermieden. Darüber hinaus verhindert die Federklammer die Entstehung von störenden Rüttelgeräuschen.

Während das Druckstück bremsscheibenseitig durch die Führungsflächen des Bremsbelaghalters axial gelagert ist, sind zur Ausbildung der axialen Führung im Gehäuse des Bremssattels in unmittelbarer Nähe zu dem Verstärkungsmechanismus axiale Führungsflächen für das der Bremsscheibe abgewandte Ende des Druckstücks vorgesehen. Alternativ kann die Führung des Druckstücks hier auch über an diesen Führungsflächen gelagerten Abschnitten des Verstärkungsmechanismus oder der Nachstelleinrichtung, welche mit dem Druckstück in Verbindung stehen, erfolgen. Vorzugsweise sind diese entsprechend bearbeiteten Führungsflächen als vier, diagonal einander gegenüberliegende Gleitflächen ausgebildet.

Die Erfindung bezieht sich auch auf einen Bremsbelaghalter als solchen, welcher die vorhergehend geschilderten Merkmale verwirklich hat.

Weitere Vorteile und Merkmale ergeben sich aus der nachfolgenden Beschreibung der Ausführungsformen unter Bezugnahme auf die beiliegenden Zeichnungen. Es zeigen:
- Fig. 1a: in perspektivischer Darstellung ein Druckstück mit einer Druckplatte sowie einen Bremsbelaghalter mit einem Bremsbelag der Scheibenbremse gemäß der Erfindung in einer ersten Ausführungsform;
- Fig. 1b: diese Elemente in einer anderen perspektivischen Darstellung;
- Fig. 2: eine Scheibenbremse gemäß der Erfindung in einer ersten Ausführungsform in Draufsicht;
- Fig. 3: eine Schnittdarstellung entlang B - B aus Fig. 2;
- Fig. 4: eine Schnittdarstellung entlang C - C aus Fig. 2;
- Fig. 5a: in perspektivischer Darstellung ein Druckstück mit einer Druckplatte sowie einen Bremsbelaghalter mit einem Bremsbelag der Scheibenbremse gemäß der Erfindung in einer zweiten Ausführungsform;
- Fig. 5b: diese Elemente in einer anderen perspektivischen Darstellung;
- Fig. 6: in perspektivischer Darstellung ein Druckstück mit einer Druckplatte sowie einen Bremsbelaghalter mit einem Bremsbelag der Scheibenbremse gemäß der Erfindung in einer dritten Ausführungsform;

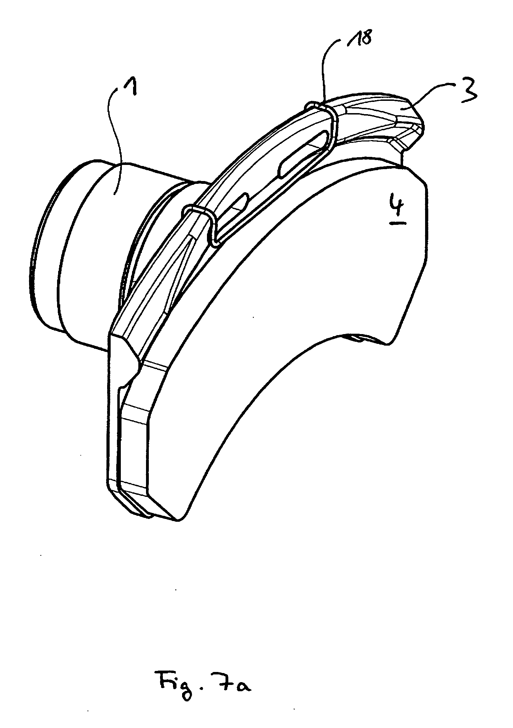

- Fig. 7a: in perspektivischer Darstellung ein Druckstück mit einer Druckplatte sowie einen Bremsbelaghalter mit einem Bremsbelag der Scheibenbremse gemäß der Erfindung zusammengehalten mit einer Federklammer; und

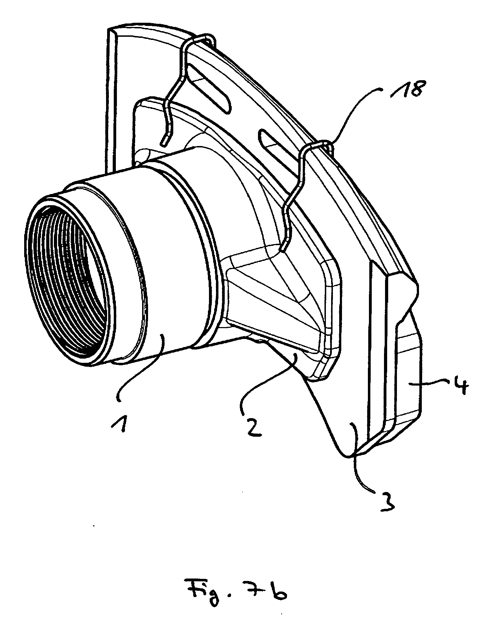

- Fig. 7b: diese Elemente in einer anderen perspektivischen Darstellung.

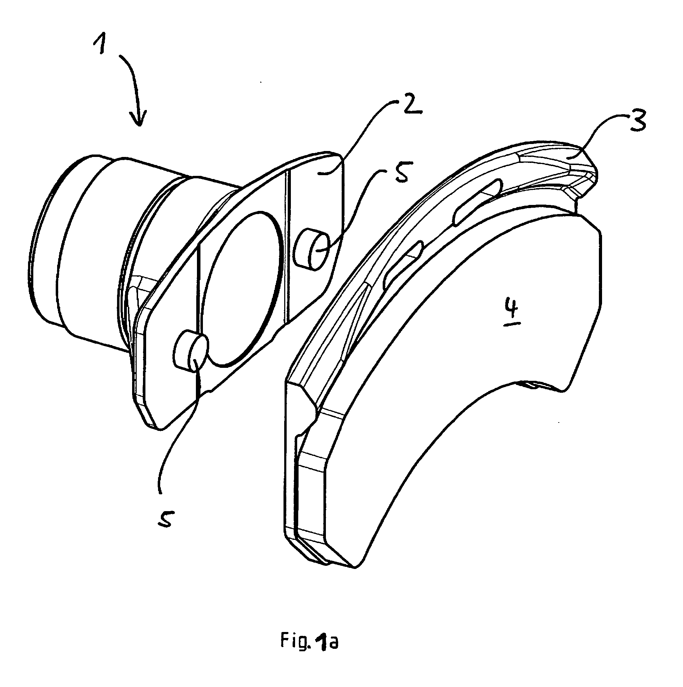

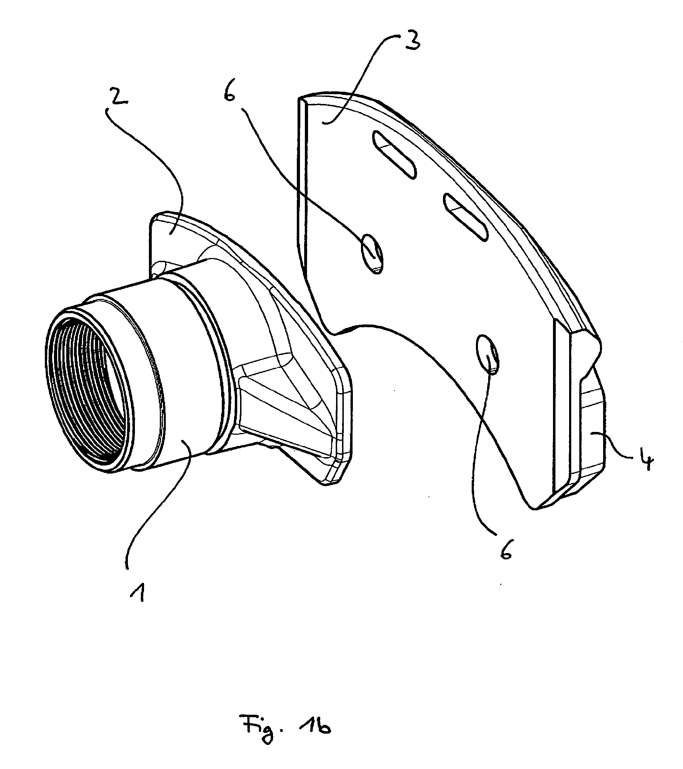

In den Fig. 1a und 1b sind exemplarisch einige Teile der Scheibenbremse gemäß einer ersten Ausführungsform gezeigt, und zwar ein zylindrisches Druckstück 1 mit einer daran angeordneten Druckplatte 2 sowie ein Bremsbelaghalter 3 mit einem darauf angeordneten Bremsbelag 4. Das Druckstück 1 wird von einem hier nicht näher dargestellten Verstärkungsmechanismus betätigt und ist in einem Bremssattelgehäuse angeordnet.

Die Druckplatte 2 weist auf ihrer dem Bremsbelaghalter 3 zugewandten Fläche zwei zapfenartige Vorsprünge 5 auf, welche zueinander auf einer Linie beabstandet sind.

Wie in Fig. 1b zu erkennen ist, weist der Bremsbelaghalter 3 entsprechende formkomplementäre Ausnehmungen 6 auf, in welche die Vorsprünge 5, vorzugsweise unter einer Spielpassung, im zusammengebauten Zustand eingreifen.

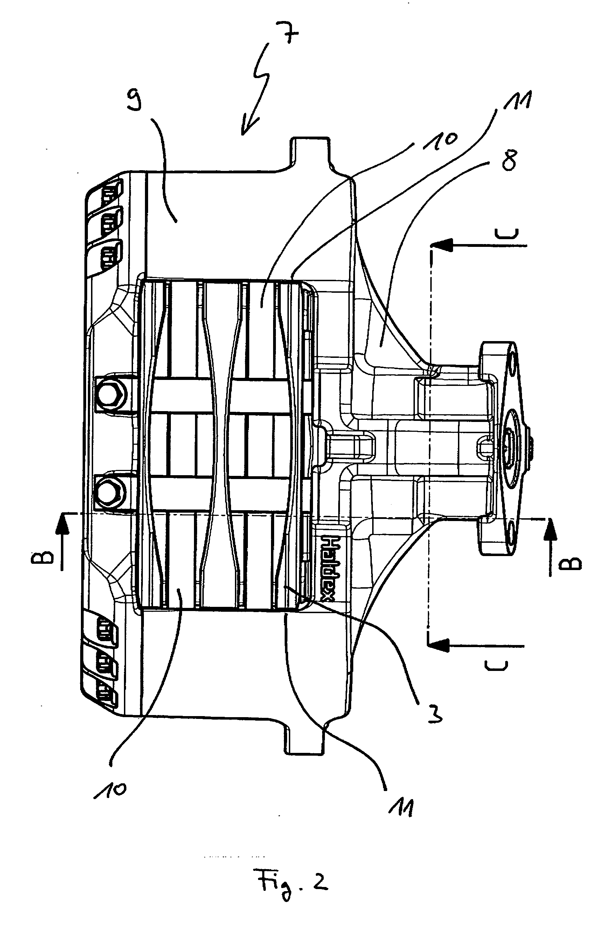

In Fig. 2 ist eine Scheibenbremse in Draufsicht gezeigt, in welcher die vorhergehend genannten Elemente integriert sind.

Die Scheibenbremse weist einen Bremssattel 7 mit einem Bremssattelgehäuse 8 zur Aufnahme des nicht näher dargestellten Betätigungsmechanismus und zwei Flügel bzw. Arme 9 auf, welche sich über zwei Bremsscheiben 10 erstrecken.

Der Bremsbelaghalter 3 ist seitlich an den Armen 9 bei Führungsflächen 11 radial, tangential und axial geführt.

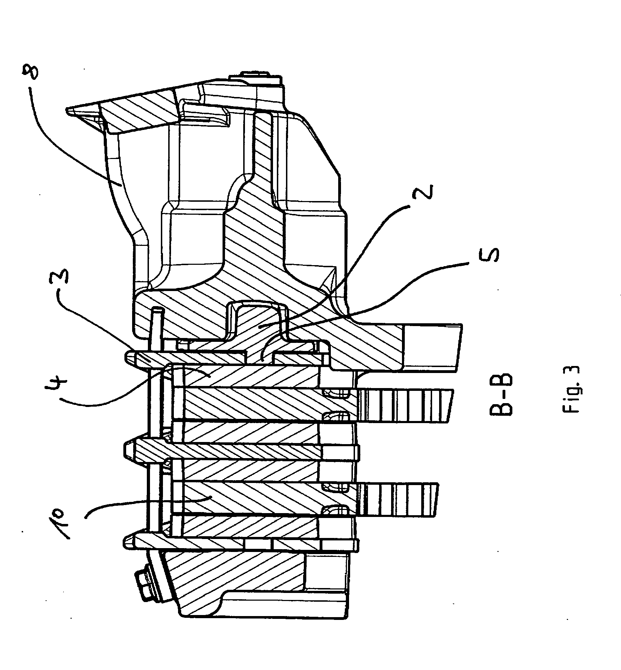

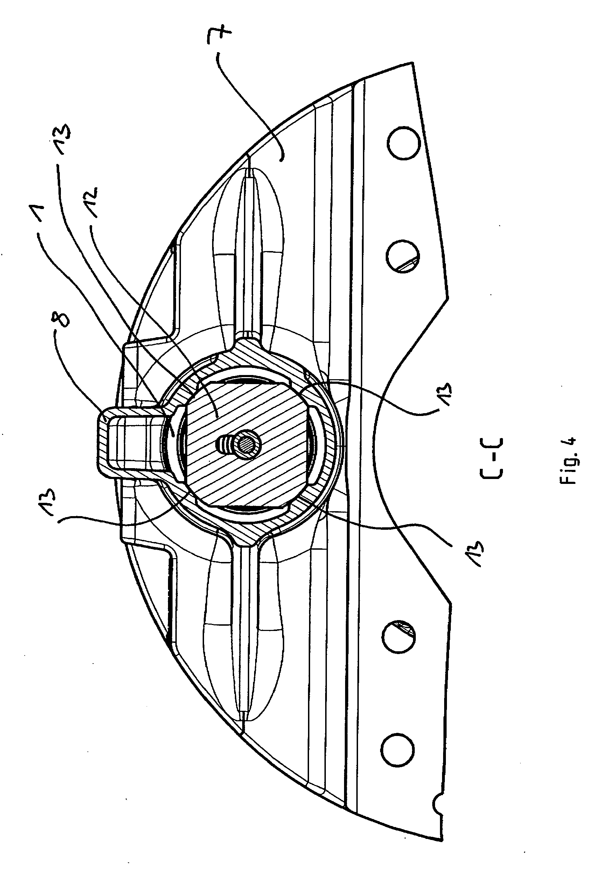

Wie in der Schnittdarstellung nach Fig. 3 zu erkennen ist, ist die Druckplatte 2 über die Zapfen 5 mit dem Bremsbelaghalter 3 verbunden. Des Weiteren ist in der Schnittdarstellung nach Fig. 4 zu erkennen, dass das Druckstück 1 bzw. Teile 12 des mit dem Druckstück 1 in kraftübertragender Verbindung stehenden Verstärkungsmechanismus und der Nachstelleinrichtung im Inneren des Bremssattelgehäuse 8 an vier, einander gegenüberliegenden Gleitflächen 13 axial geführt sind.

Auf Grund der Tatsache, dass die Druckplatte 2 mit dem Bremsbelaghalter 3 in Verbindung steht, wird damit das Druckstück 2 im Bremssattelgehäuse 8 über die Gleitflächen 13 und die Führungsflächen 11 axial verschieblich geführt.

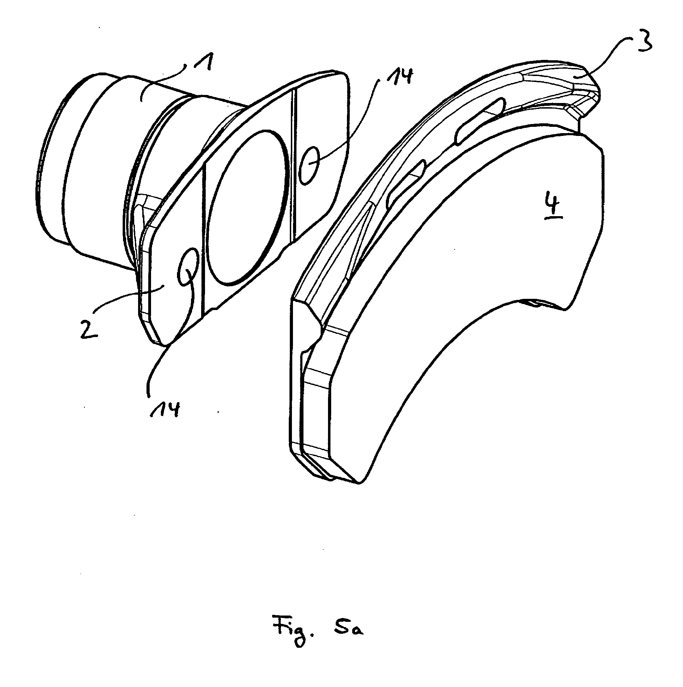

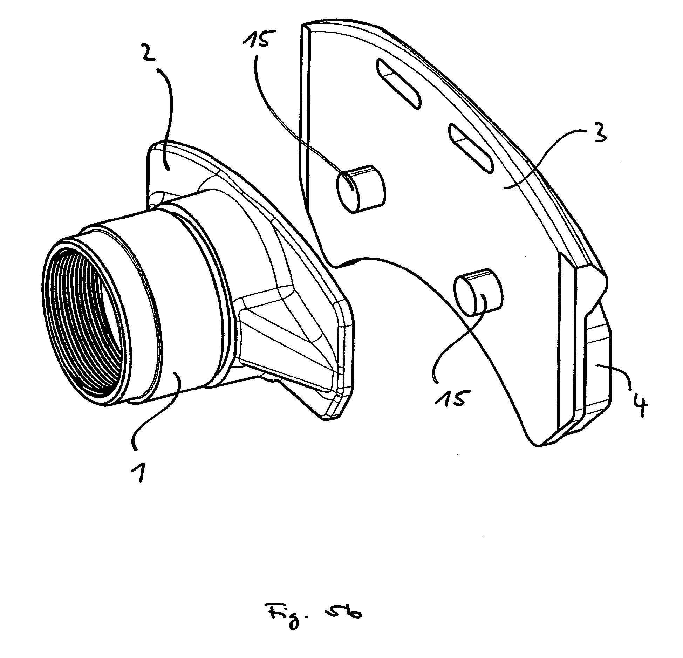

In den Fig. 5a und 5b ist eine weitere Ausführungsform der Erfindung dargestellt. In dieser weist die Druckplatte 2 Ausnehmungen 14 auf, in die formkomplementäre zapfenartige Vorsprünge 15 an dem Bremsbelaghalter 3 eingreifen, und so beide Elemente miteinander unter Vermeidung seitlicher oder radialer Relativbewegungen verbinden.

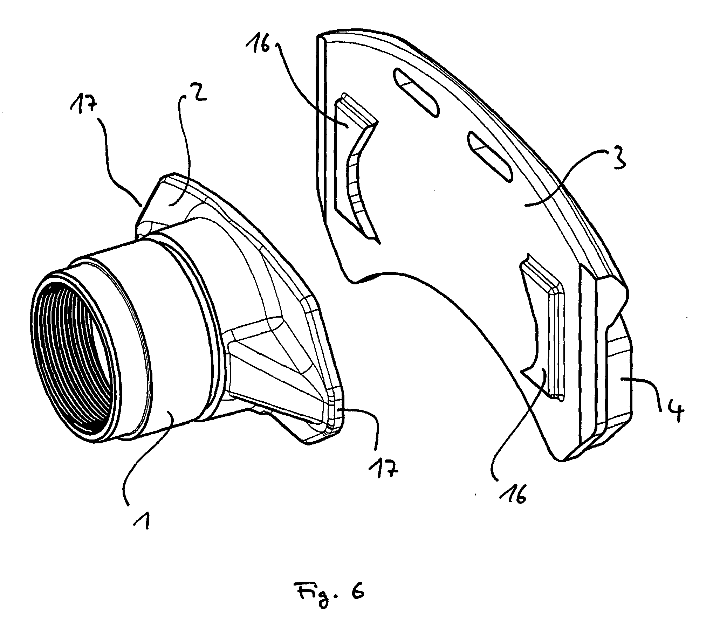

Fig. 6 zeigt eine bevorzugte Ausführungsform der Erfindung, bei welcher der Bremsbelaghalter 3 zwei, voneinander beabstandete U-förmige Vorsprünge 16 aufweist, welche eine solche Kontur aufweisen, dass diese die seitlichen Ränder 17 der Druckplatte 2 einschließen und dabei eine radiale und tangentiale Fixierung der Druckplatte 2 an dem Bremsbelaghalter 3 sicherstellen.

Um beide Elemente, die Druckplatte 2 und den Bremsbelaghalter 3, in einer Verbindung zu halten, die auch bei Bremskraftlösung einen einwandfreien Rückzug des Bremsbelags 4 gestattet, kann in einigen Ausführungen, bei welcher die Toleranz der Passung zwischen den Verbindungselementen 5 und 6, 14 und 15 sowie 16 und 17 dies nicht von sich aus ermöglicht, eine zusätzliche Federklammer 18 vorgesehen sein, welche die Druckplatte 2 und den Bremsbelaghalter 3 übergreift und diese verliersicher miteinander verbindet. Diese Federklammer 18 stellt sicher, dass der Bremsbelag 4 sofort von der Bremsscheibe zurückgezogen wird, wenn ein Rückstellmechanismus das Druckstück 1 wieder in seine Ausgangslage überführt.

## Patentansprüche

1. Scheibenbremse bestehend aus einem zumindest eine Bremsscheibe (10) übergreifenden Bremssattel (7) und einem in dem Bremssattel (7) aufgenommen Bremsbetätigungsmechanismus, welcher einen Verstärkungsmechanismus zur Einleitung einer Bremskraft in ein Druckstück (1) aufweist, welches in dem Bremssattel (7) verschieblich angeordnet ist und an seinem bremsscheibenseitigen Ende eine Druckplatte (2) aufweist, um die Bremskraft über einen Bremsbelaghalter (3) und einen Bremsbelag (4) auf die Bremsscheibe (10) zu übertragen, wobei der Bremsbelaghalter (3) mit dem Bremsbelag (4) in dem Bremssattel (7) oder in einem Träger, welcher den Bremssattel (7) führt, radial und tangential geführt ist, **dadurch gekennzeichnet, dass** die Druckplatte (2) mit dem Bremsbelaghalter (3) verbunden ist derart, dass bei Bremsbetätigung und Bremskraftlösung das Druckstück (1) über den Bremsbelaghalter (3) in dem Bremssattel (7) axial verschieblich geführt ist.

2. Scheibenbremse nach Anspruch 1, bei welcher die Druckplatte (2) auf ihrer der Bremsscheibe (10) zugewandten Seite zumindest ein Verbindungselement (5,14,17) aufweist, welches mit einem formkomplementären Verbindungselement (6,15,16) zusammenwirkt, welches auf seiner der Bremsscheibe (10) abgewandten Seite an dem Bremsbelaghalter (3) angeordnet ist.

3. Scheibenbremse nach Anspruch 2, bei welcher die Druckplatte (2) zwei zueinander beabstandete Vorsprünge (5) aufweist, welche in zwei entsprechende formkomplementäre Ausnehmungen (6) in dem Bremsbelaghalter (3) eingreifen.

4. Scheibenbremse nach Anspruch 2, bei welcher die Druckplatte (2) zwei zueinander beabstandete Ausnehmungen (14) aufweist, in welche zwei entsprechende formkomplementäre Vorsprünge (15) des Bremsbelaghalters (3) eingreifen.

5. Scheibenbremse nach Anspruch 2, bei welcher der Bremsbelaghalter (3) eine Ausnehmung aufweist, welche die Druckplatte (2) vollständig formkomplementär aufnimmt.

6. Scheibenbremse nach Anspruch 2, bei welcher der Bremsbelaghalter (3) zwei einander gegenüberliegende Vorsprünge (16) aufweist, welche die Druckplatte (2), deren Seiten einfassend, aufnehmen.

7. Scheibenbremse nach einem der Ansprüche 3 bis 6, bei welcher zwischen den Verbindungselementen (5,6,14,15,16,17) jeweils eine Spielpassung mit einer solchen Toleranz ausgebildet ist, dass die Druckplatte (2) radial und tangential fixiert und gleichzeitig ein Auswechseln der Bremsbelaghalter (3) bei Bedarf sichergestellt ist.

8. Scheibenbremse nach einem der vorhergehenden Ansprüche, bei welcher zumindest eine Federklammer (18) vorgesehen ist, welche den Bremsbelaghalter (3) und die Druckplatte (2), beide miteinander in fester Verbindung haltend, übergreift.

9. Scheibenbremse nach einem der Ansprüche 1 bis 8, bei welcher das Druckstück (1) als eine Traverse mit zwei darin drehbar angeordneten, parallelen Nachstellspindeln ausgebildet ist und die Druckplatte (2) mit den zwei Nachstellspindeln zusammenwirkt.

10. Scheibenbremse nach einem der Ansprüche 1 bis 8, bei welcher das Druckstück (1) als ein im Wesentlichen rotationssymmetrischer Stößel mit einer darin angeordneten Nachtstellspindel ausgebildet ist und die Druckplatte (2) mit der Nachstellspindel zusammenwirkt.

11. Scheibenbremse nach Anspruch 9 oder 10, bei welcher das Druckstück (1) im Bremssattel (7) im Bereich seines der Bremsscheibe (10) abgewandten Endes, an welchem der Verstärkungsmechanismus angreift, geführt ist.

12. Scheibenbremse nach Anspruch 11, bei welcher das Druckstück (1) im Bremssattel (7) an vier, diagonal gegenüberliegenden Gleitflächen (13) geführt ist.

13. Bremsbelaghalter für einen Bremsbelag für eine Scheibenbremse gemäß Anspruch 1, **dadurch gekennzeichnet, dass** an der dem Bremsbelag (4) gegenüberliegenden Seite Vorrichtungen (6,15,16) zur Verbindung mit einer Druckplatte (2) eines Druckstücks (1) eines Bremsbetätigungsmechanismus der Scheibenbremse vorgesehen sind, wobei die Vorrichtungen (6,15,16) an dem Bremsbelaghalter (3) so ausgestaltet und angeordnet sind, dass durch diesen bei Bremsbetätigung und bei Bremskraftlösung das Druckstück (1) in dem Bremssattel (7) axial verschieblich führbar ist.

14. Bremsbelaghalter nach Anspruch 13, bei welchem zwei zueinander beabstandete Ausnehmungen (6) vorgesehen sind, in welche zwei formkomplementäre Vorsprünge (5) der Druckplatte (2) aufnehmbar sind.

15. Bremsbelaghalter nach Anspruch 13, bei welchem zwei zueinander beabstandete Vorsprünge (15) vorgesehen sind, welche in zwei entsprechenden formkomplementären Ausnehmungen (14) der Druckplatte (2) aufnehmbar sind.

16. Bremsbelaghalter nach Anspruch 13, bei welchem eine Ausnehmung vorgesehen ist, in welche die Druckplatte (2) vollständig formkomplementär aufnehmbar ist.

17. Bremsbelaghalter nach Anspruch 13, bei welchem zwei einander gegenüberliegende Vorsprünge (16) vorgesehen sind, zwischen welchen die Druckplatte (2), deren Seiten einfassend, aufnehmbar ist.

## Claims

1. Disc brake comprising brake caliper (7) overlapping at least one brake disc (10) and a brake actuation mechanism received in the brake caliper (7), said brake actuation mechanism comprises an enforcement mechanism for introducing a brake force into a thrust piece (1), which is displaceably arranged in the brake caliper (7) and which comprises a thrust plate (2) at its end facing the brake disc, in order to transfer the brake force by means of a brake lining retainer (3) and of a brake lining (4) onto the brake disc (10), wherein the brake lining retainer (3) with the brake lining (4) is radially and tangentially guided in the brake caliper (7) or in a carrier which guides the brake caliper (7), **characterized in that** the thrust plate (2) is connected to the brake lining retainer (3) in such a way that at brake actuation and at brake release the thrust piece (1) is axially displaceably guided by means of the brake lining retainer (3) in the brake caliper (7).

2. Disc brake according to claim 1, in which the thrust plate (2) comprises at least one connecting element (5, 14, 17) at its side facing the brake disc (10), which connecting element cooperates with a connecting element (6, 15, 16) being complementary in shape, which connecting element (6, 15, 16) is arranged at its side opposite of the brake disc (10) at the brake lining retainer (3).

3. Disc brake according to claim 2, in which the thrust plate (2) comprises two projections (5) being spaced apart, which projections (5) engage in two recesses (6) in the brake lining retainer (3), which recesses (6) being correspondingly complementary in shape.

4. Disc brake according to claim 2, in which the thrust plate (2) comprises two recesses (14) being spaced apart, into which two protections (15) of the brake lining retainer engage, which two projections (15) being correspondingly complementary in shape.

5. Disc brake according to claim 2, in which the brake lining retainer (3) comprises a recess in which the thrust plate (2) is received in its entirety complementarily in shape.

6. Disc brake according to claim 2, in which the brake lining retainer (3) comprises two projections (16) facing each other, which projections (16) receive the thrust plate (2) thereby encompassing the sides of it.

7. Disc brake according to one of claims 3 to 6, in which a clearance fit is formed between the connecting elements (5, 6, 14, 15, 16, 17) with such a tolerance that the thrust plate (2) is radially and tangentially fixed and at the same time changing of the brake lining retainer (3), if necessary, is allowed.

8. Disc brake according to one of the preceding claims, in which at least one spring bracket (18) is provided which overlaps the brake lining retainer (3) and the thrust plate (2) thereby keeping them in fixed connection.

9. Disc brake according to one of claims 1 to 8, in which the thrust piece (1) is formed as a cross bar with two parallel adjustment spindles rotatably arranged therein and in which the thrust plate (2) cooperates with the two adjustment spindles.

10. Disc brake according to one of claims 1 to 8, in which the thrust piece (1) is formed as a tappet being substantially axially symmetrical with an adjustment spindle arranged therein and in which the thrust plate (2) cooperates with the adjustment spindle.

11. Disc brake according to claim 9 or 10, in which the thrust piece (1) is guided in the brake caliper (7) in the area of its end facing away from the brake disc (10), at which end the enforcement mechanism attaches.

12. Disc brake according to claim 11, in which the thrust piece (1) is guided in the brake caliper (7) at four sliding surfaces (13) being diagonally opposite to each other.

13. Brake lining retainer for a brake lining for a disc brake according to claim 1, **characterized in that** means (6, 15, 16) for connecting with a thrust plate (2) of a thrust piece (1) of a brake actuation mechanism of the disc brake are provided at the side opposite of the brake lining (4), wherein said means (6, 15, 16) at the brake lining retainer (3) are configured and arranged in such a way that by said brake lining retainer (3) at brake actuation and at brake release the thrust piece (1) is axially displaceably guide in the brake caliper (7).

14. Brake lining retainer according to claim 13, in which two recesses (6) being spaced apart are provided, into which two projections (5) of the thrust plate (2) can be received, which projections (5) being complementary in shape.

15. Brake lining retainer according to claim 13, in which two projections (15) being spaced apart are provided, which can be received in two recesses (14) of the thrust plate (2), which recesses (14) being correspondingly complementary in shape.

16. Brake lining retainer according to claim 13, in which a recess is provided, into which a thrust plate (2) can be received in its entirety complementarily in shape.

17. Brake lining retainer according to claim 13, in which two projections (16) facing each other are provided, between which projections (16) the thrust plate (2) can be received thereby encompassing the sides of it.

## Revendications

1. Les freins à disque sont composés d'un étrier de freinage (7) recouvrant au moins un disque de frein (10) et d'un mécanisme d'actionnement du frein logé dans l'étrier de freinage (7) lequel comporte un mécanisme de renforcement pour l'introduction d'une force de freinage dans un élément de pression (1) qui est lui-même placé par glissement dans l'étrier de freinage (7) et comporte une plaque d'appui (2) à son extrémité de chaque côté du disque de frein afin de transmettre la force de freinage par le biais d'un support de garniture de frein (3) et d'une garniture de frein (4) au disque de frein (10), le support de garniture de frein (3) avec une garniture de frein(4) étant guidé de manière radiale et tangentielle dans l'étrier de freinage (7) ou dans un support qui guide l'étrier de freinage (7), **caractérisé en ce** sens que la plaque d'appui (2) est raccordée au support de garniture de frein de manière à ce que lors de l'actionnement du frein et du déclenchement de la force de freinage l'élément de pression (1) soit guidé et poussé axialement par le support de garniture de frein (3) dans l'étrier de freinage (7).

2. Frein à disque selon la revendication 1, pour lequel la plaque d'appui (2) comporte au moins un élément de raccordement (5, 14, 17) sur sa face orientée vers le disque de freinage (10) qui agit avec un élément de raccordement de forme complémentaire (6, 15, 16) qui est placé sur sa face opposée au disque de freinage (10) sur le support de garniture de frein (3).

3. Frein à disque selon la revendication 2 pour lequel la plaque d'appui (2) comporte deux saillies (5) écartées qui s'adaptent dans deux évidements (6) de forme complémentaire correspondants dans le support de garniture de frein (3).

4. Frein à disque selon la revendication 2 pour lequel la plaque d'appui (2) comporte deux évidements écartés (14) dans lesquels s'enfoncent deux saillies (15) de forme complémentaire correspondantes du support de garniture de frein (3).

5. Frein à disque selon la revendication 2 pour lequel le support de garniture de frein (3) comporte un évidement dans lequel se loge complètement la plaque d'appui (2).

6. Frein à disque selon la revendication 2 pour lequel le support de garniture de frein (3) comporte deux saillies (16) en vis-à-vis dans lesquelles se loge la plaque d'appui (2) encadrant les deux côtés.

7. Frein à disque selon l'une des revendications 3 à 6 pour lequel un ajustement avec jeu d'une certaine tolérance est réalisé entre chaque élément de raccordement (5, 6, 14, 15, 16, 17) de sorte que la plaque d'appui (2) soit fixée de manière axiale et tangentielle et qu'en même temps un changement du support de garniture de frein (3) soit assuré si nécessaire.

8. Frein à disque selon l'une des revendications précédentes pour lequel au moins un étrier de ressort (18) est prévu, lequel recouvre le support de garniture de frein (3) et la plaque d'appui (2) en les maintenant tous les deux fixement.

9. Frein à disque selon l'une des revendications 1 à 8 pour lequel l'élément de pression (1) est réalisé comme une traverse avec deux broches de réglage parallèles en rotation et la plaque d'appui (2) agit avec les deux broches de réglage.

10. Frein à disque selon l'une des revendications 1 à 8 pour lequel l'élément de pression (1) est réalisé comme un coulisseau à rotation symétrique avec une broche de réglage à l'intérieur et la plaque d'appui (2) agit avec la broche de réglage.

11. Frein à disque selon les revendications 9 ou 10 pour lequel l'élément de pression (1) est guidé dans l'étrier de freinage (7) dans la zone de son extrémité opposée au disque de freinage (10) à laquelle le mécanisme de renforcement s'applique.

12. Frein à disque selon la revendication 11 pour lequel l'élément de pression (1) est guidé dans l'étrier de freinage (7) par quatre glissières en diagonale (13).

13. Le support de garniture de frein pour une garniture de frein pour un frein à disque selon la revendication 1 **caractérisé en ce** sens que les dispositifs (6, 15, 16) pour le raccordement avec une plaque d'appui (2) d'un élément de pression (1) d'un mécanisme d'actionnement de frein du frein à disque sont prévus sur le côté opposé de la garniture de frein (4) et que les dispositifs (6, 15, 16) du support de garniture de frein (3) sont montés et disposés de manière à ce que l'élément de pression puisse être coulissé axialement dans l'étrier de freinage (11) lors de l'actionnement du frein et du déclenchement de la force de freinage.

14. Le support de garniture de frein selon la revendication 13 pour lequel il est prévu deux évidements (6) écartés dans lesquels peuvent se loger les deux saillies de forme complémentaire (5) de la plaque d'appui (2).

15. Le support de garniture de frein selon la revendication 13 pour lequel il est prévu deux saillies (15) écartées qui peuvent être logées dans deux évidements de forme complémentaire correspondants (14) de la plaque d'appui (2).

16. Le support de garniture de frein selon la revendication 13 pour lequel il est prévu un évidement dans lequel peut se loger la plaque d'appui (2) de forme complémentaire.

17. Le support de garniture de frein selon la revendication 13 pour lequel il est prévu deux saillies (16) en vis-à-vis entre lesquelles la plaque d'appui (2) peut se loger en encadrant les deux côtés.
